# EUROPEAN PATENT APPLICATION

(11) **EP 4 648 390 A1**
(43) Date of publication of application: **12.11.2025**
(21) Application number: 24726522.6
(22) Date of filing: 03.01.2024
(51) Int. Cl.: H04L 67/14, H04L 67/289, H04L 61/4511, H04W 48/18

(54) **EDGE COMPUTING-BASED COMMUNICATION**

(30) Priority: 06.01.2023 US 202363437612 P
(71) Applicant: LG Electronics Inc., Seoul 07336 (KR)
(72) Inventor: KIM, Hongsuk, Seoul 06772 (KR); KIM, Laeyoung, Seoul 06772 (KR); KIM, Jaewoo, Seoul 06772 (KR); YOUN, Myungjune, Seoul 06772 (KR)
(74) Representative: Maikowski & Ninnemann Patentanwälte Partnerschaft mbB
(86) International application number: PCT/KR2024/000086
(87) International publication number: WO 2024/147621

(57) **Abstract**

The present disclosure provides a method for a V-SMF to perform communication. The method may include: receiving an HR-SBO allowed indication from an AMF; transmitting a request message to an EASDF relating to the generation of a DNS context; and receiving a response message including an IP address of the EASDF from the EASDF.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

There is a need for support for providing edge computing services to terminals in home-routed roaming scenarios. However, according to the prior art, there is no effective way to support this.

### DISCLOSURE

### TECHNICAL SOLUTION

In one aspect, a method is provided for a V-SMF to perform a communication. The method may include: receiving an HR-SBO allowed indication from an AMF; transmitting a request message to an EASDF relating to the creation of a DNS context; and receiving a response message including an IP address of the EASDF from the EASDF.

In another aspect, an apparatus implementing the above method is provided.

In one aspect, a method is provided for a UE to perform a communication. The method may include: transmitting a registration request message to an AMF; receiving a registration acceptance message from the AMF; transmitting a PDU session establishment request message to the AMF; and receiving a PDU session establishment acceptance message from the V-SMF.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIGS. 7 and 8 show an example of a PDU session establishment procedure to which implementations of the present disclosure is applied.
FIG. 9 illustrates an example of a procedure associated with a PDU session supporting HR-SBO of a VPLMN.
FIG. 10 illustrates an example of a procedure in accordance with one embodiment of the disclosure.
FIG. 11 illustrates an example of operation of a V-SMF in accordance with one embodiment of the disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

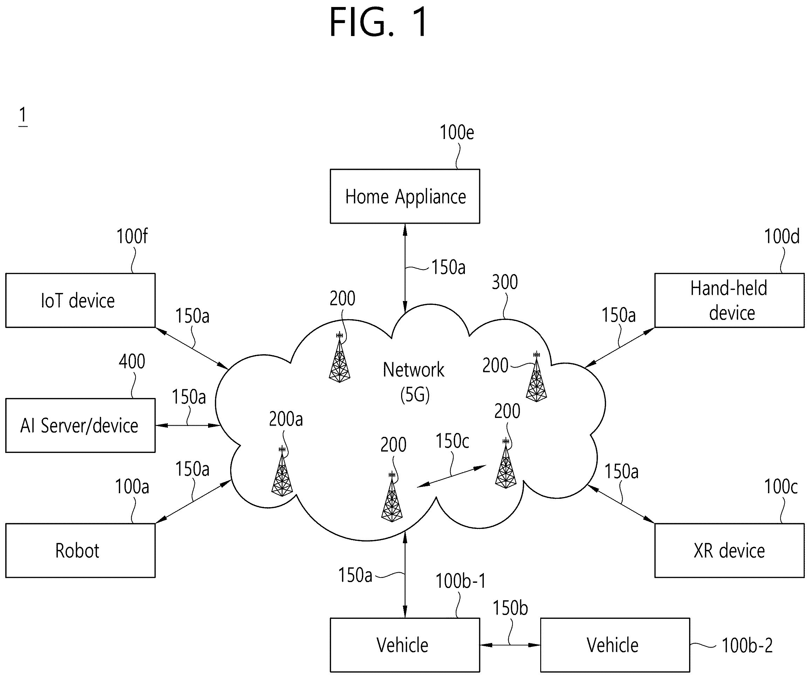

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an extended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| | | |
|---|---|---|
| Frequency Range designation | Corresponding frequency range | Subcarrier Spacing |
| FR1 | 410MHz - 7125MHz | 15, 30, 60kHz |
| FR2 2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

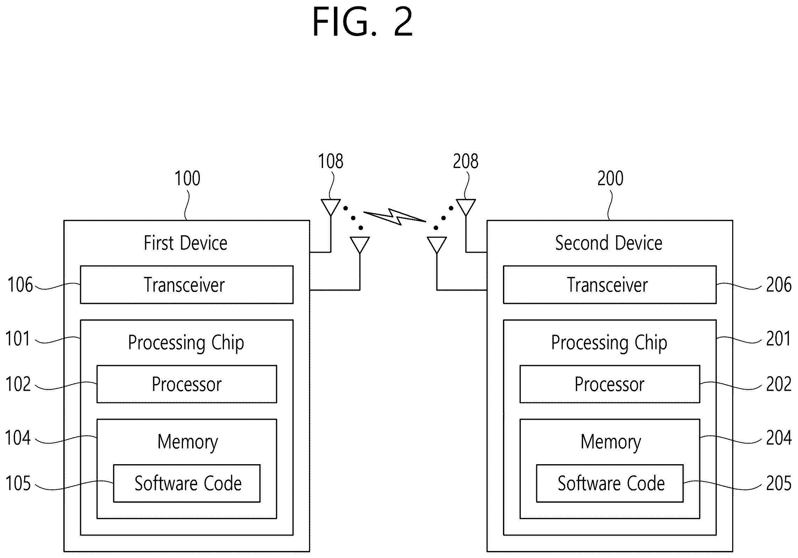

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

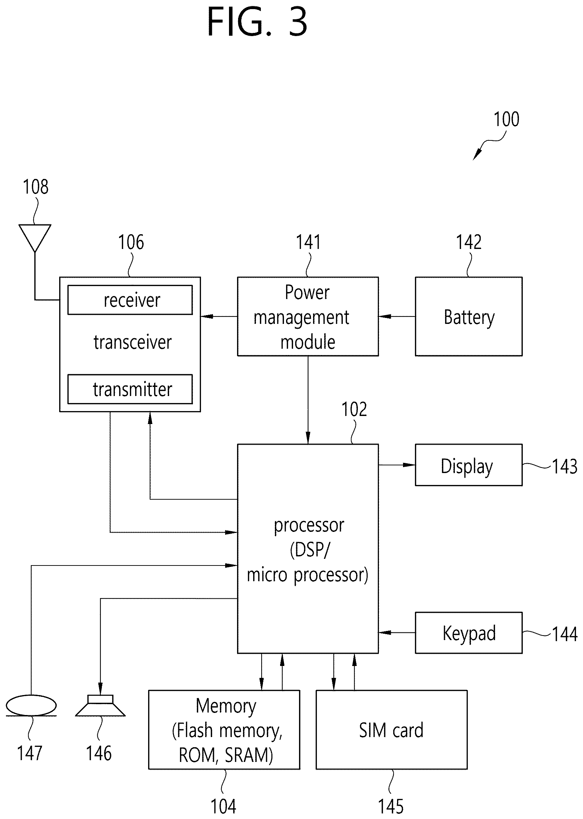

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

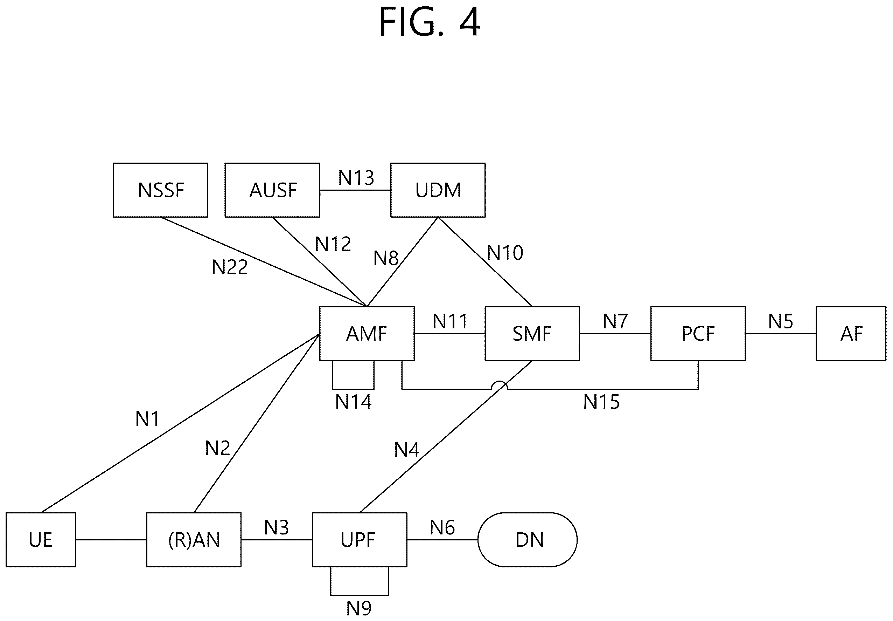

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

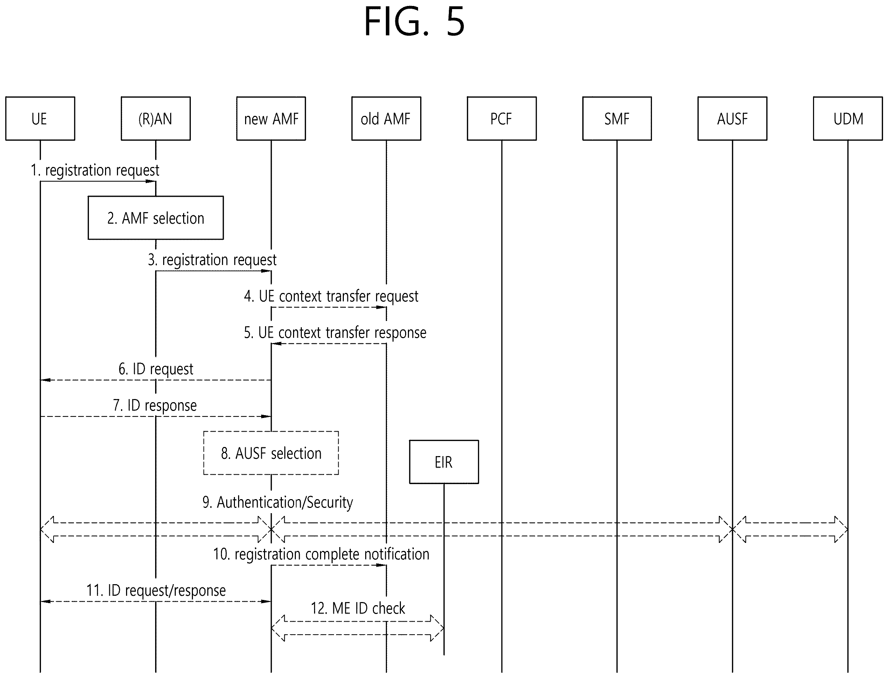

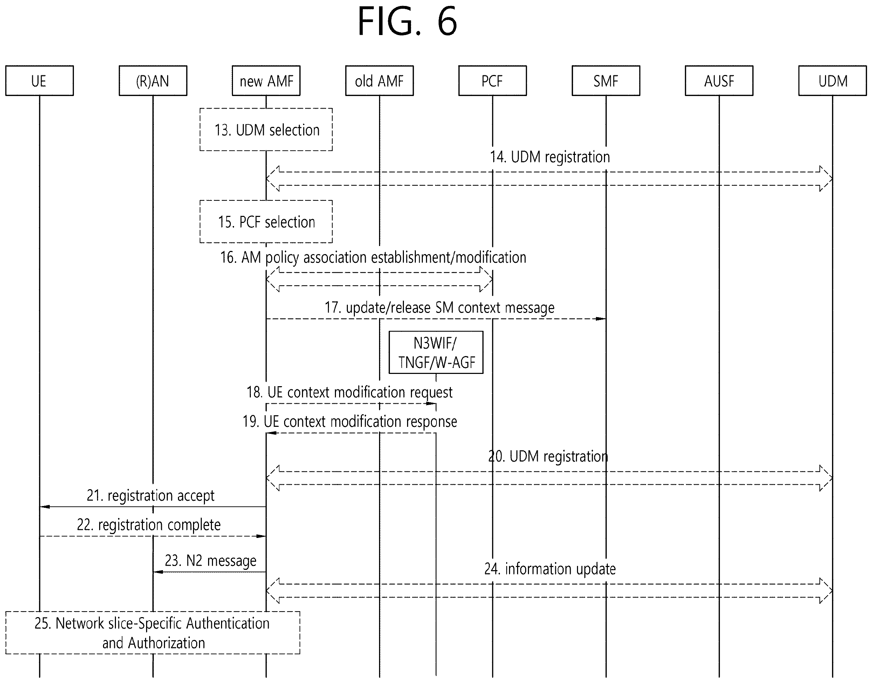

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization procedure.

A PDU session establishment procedure is described. Section 4.3.2 of 3GPP TS 23.502 V16.3.0 (2019-12) can be referred.

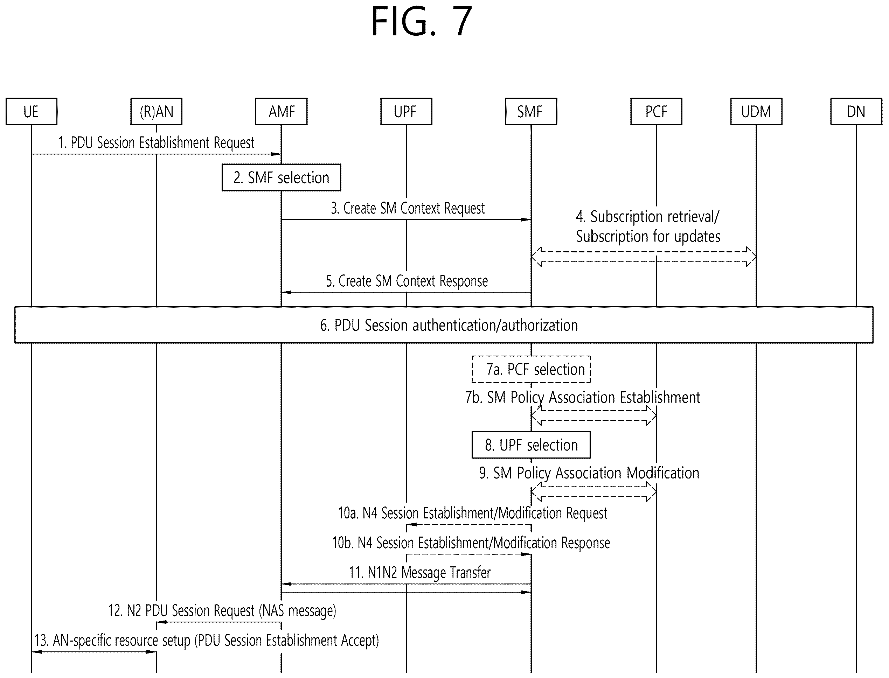

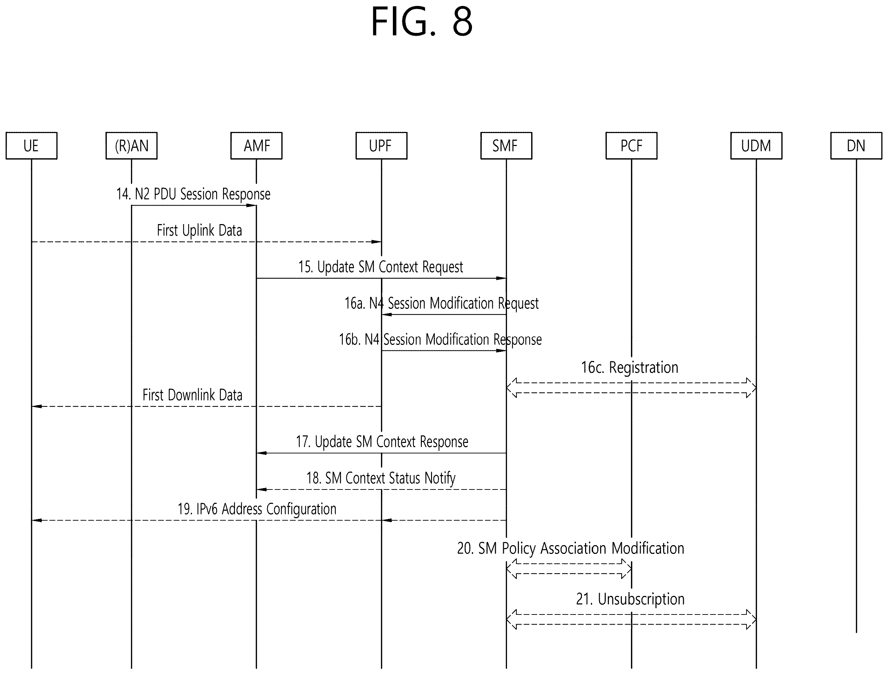

**FIGS. 7** **and** **8** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 7 and 8 specify the procedures for establishing PDU sessions associated with a single access type at a given time.

The procedure shown in FIGS. 7 and 8 assumes that the UE has already registered on the AMF thus unless the UE is emergency registered the AMF has already retrieved the user subscription data from the UDM.

First, procedures of FIG. 7 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 8, which follow the procedures of FIG. 7, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <UAS (Uncrewed Aerial System)>

In 5G, support for Uncrewed Aerial Systems (UAS) is being discussed. A UAS may include one or more unmanned aerial vehicles (UAVs) and one unmanned aerial vehicle controller (UAV-C). The UAVs may be controlled by the UAV Controller over a Command and Control (C2) link in a 3GPP mobile network or a non-3GPP mobile network.

In the present disclosure, C2 communication may refer to Command and Control (C2) Communication. C2 communication may mean a user plane link for delivering messages including command and control information for UAV behavior from a UAV controller or Uncrewed Aircraft Systems Traffic Management (UTM) to a UAV, or for reporting telemetry data from a UAV to a UAV controller or UTM.

For the management of the UAS, the UAS Service Supplier (USS)/UAS Traffic Management (UTM) and the UAV can exchange application data traffic over the 3GPP mobile network. The UAV may be considered as a UE. For example, the example in Figure 7 below illustrates a logical 5GS and EPS architecture for a UAV. Further details can be found in TS 23.256 V17.0.0.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 7 shows an example of a logical 5GS and EPS architecture for a UAV.

In order to be provided with connectivity services from the network, the UAV must perform an authentication procedure through the UAV USS authentication and authorization procedure (UUAA). For example, depending on the network operator's policy, authentication may be performed in the following ways.
1) The UAV may perform UUAA during the process of registering with the network: For example, the UAV may have an Aerial UE subscription in its Access and Mobility Subscription data. If the registration request message sent by the UAV includes the CAA-Level UAV ID, UUAA may be performed (this may be referred to as UUAA-MM). If UUAA-MM is not performed, the UAV may perform UUAA during the PDU session creation process.
2) The UAV may perform UUAA during the PDU session establishment procedure for the DNN for the UAV service (PDN connection in case of EPS) (this may be referred to as UUAA-SM): For 5GS, UUAA-SM may be initiated by the SMF when the UAV provides the CAA-Level UAV ID in the PDU session creation request message. For EPS, it may be initiated by SMF+PGW-C when the UAV provides the CAA-Level UAV ID to the ESM message container.

UAV communications can be divided into USS communications and C2 communications between the UAV and the USS. USS communication can be user plane data transmission except C2 communication. The PDU Session/PDN connection for C2 communication and the PDU Session/PDN connection for USS communication may be used in common or separately, i.e., the PDU Session/PDN connection for C2 communication and the PDU Session/PDN connection for USS communication may be the same or different.

UAS Network Function is supported by Network Exposure Function (NEF) or Service Capability Exposure Function (SCEF)+NEF, which can be used for external exposure of services to USS. UAS-NF can leverage the existing exposure services of NEF/SCEF for operations such as authentication/authorization of UAVs, flight permission, revocation of UAV-UAVC pairing permission and related operations, location reporting, and control of QoS/traffic filtering for C2 communication. The UAS NF can store the results of the UUAA-MM process and the results of the UUAA-SM process. In addition, to support re-authentication at the request of the USS, the UAS NF may store whether the re-authentication should be requested to the AMF or the SMF/SMF+PGW-C, and may store the address of the AMF or SMF/SMF+PGW-C currently providing the service.

The USS may initiate the Re-authentication process through the UAS NF at any time after the UUAA process has ended. UUAA re-authentication can be performed via SMF (UUAA-SM) or AMF (UUAA-MM) depending on the network settings. The result of the re-authentication may be communicated from the USS to the UE via SMF (UUAA-SM) or AMF (UUAA-MM) through the UAS NF.

A number of key issues for edge computing enhancements can be discussed with solutions for support in 5GS. For example, 3GPP TR 23.700-48 V18.0.0: 5G System Enhancements for Edge Computing; Phase 2 can be referenced. The following exemplary issue discusses and connects to the following exemplary issues for providing edge computing services to the terminal in a roaming scenario. For example, based on the following objectives, the following support measures are being considered

Issue: Accessing Edge Hosting Environment (EHE) in a VPLMN when roaming.

Here, EHE refers to a network environment that includes an edge application server. This network environment can be an environment to support edge computing services.

The purpose of this main issue is to define 5GS enhancements to support UE access to EHE in VPLMN.

The two scenarios (i.e. UE accessing EHE in VPLMN via LBO PDU session and UE accessing EHE in VPLMN via PDU session set to HR) may be described in TR 23.700-48 V18.0.0 clause 5.1.2.

For scenarios that use LBO PDU sessions, potential solutions should address the following:
- How to establish an LBO PDU session toward the correct S-NSSAI/DNN pair to access the EHE in the VPLMN
- Method to support Rel-17 edge computing-related procedures such as EAS (re)discovery.

For scenarios that use PDU sessions with PSA on HPLMN, potential solutions might address the following
- Method to authenticate a PDU session to support local traffic routing to access the EHE of a VPLMN;
- Whether and how VPLMN supports charging for local traffic in PDU sessions that support routing local traffic to access EHE.
- Method to support edge computing-related procedures such as EAS (re-)discovery;
- How to ensure proper policy control and QoS enforcement;
- Potential impact on policies and QoS controls;
- How to configure a UE with the VPLMN ECS address as in a roaming scenario;
- How to support edge relocation in roaming scenarios.

Scenarios such as the following examples might be considered

For roaming UEs (e.g., UEs in roaming), it may be necessary to access EHE from the VPLMN to fulfill use cases that require edge computing. Two main scenarios can be considered
1) UEs accessing the V-EHE via Local Breakout (LBO) PDU sessions:
   This scenario supports all connection models. This scenario assumes that LBO PDU sessions are used to access the EHE of the VPLMN for Edge Computing (EC) applications. Based on the LBO PDU session, the UE can access the EHE of the VPLMN.

NOTE 1: In order to access to the EHE of a VPLMN and the home DN of an HPLMN simultaneously, requires two different PDU sessions.

2) UEs accessing the V-EHE via a Home Routed (HR) PDU session (i.e., the PSA from the HPLMN is used):
This scenario assumes that session breakout for HR PDU sessions is used to access the EHE of the VPLMN for EC applications. Through a single PDU session, the UE can access the EHE of the VPLMN and also the DN of the HPLMN.

NOTE 2: Based on a single PDU session and (DNN+S-NSSAI), both EC and non-EC applications can be supported in roaming or non-roaming cases.

To support such PDU sessions, it shall be studied how the UE can access the V-EHE via HR PDU sessions. Two sub-scenarios can be considered
2.1) The HPLMN may know the EAS deployment information of the VPLMN for a specific service. The HPLMN triggers EAS discovery and local traffic routing on the VPLMN.
2.2) The HPLMN may not know the EAS deployment information of the VPLMN. The VPLMN triggers EAS discovery and local traffic routing on the VPLMN.

The following assumptions can be applied in the example below.

Allowed deployment options or solution options in the prior art need not be limited for both VPLMN and HPLMN. That is, any deployment option or solution option allowed in the prior art may be considered. Furthermore, VPLMNs and HPLMNs may have different deployment options, such as different EAS (re)discovery options or whether to deploy dynamic PCCs.

Home Routed Session Breakout (HR-SBO) technology was discussed to support routing of local traffic within the VPLMN via home-routed PDU sessions. Service procedures to support this have been included in the TS 23.548 V18.0.0 S6.7 standardization.

In the following, an example of how VPLMNs can support local traffic routing for home-routed PDU sessions for roaming (HR-SBO) is described.

When roaming, based on the subscription, the UE can establish a home routed session that can support session breakout in the V-PLMN. In this scenario, for a home routed session, the home PLMN and the visited PLMN may have an agreement to support local traffic routing(i.e., session breakout performed by the V-SMF, also known as HR-SBO) in the VPLMN.

After establishing the HR-SBO PDU session, the UE can access the EAS deployed in the EHE of the VPLMN. The UE can also access the data network of the home PLMN.

The following procedure describes a brief example of the procedure for authorizing local traffic offloading using HR PDU sessions. An example of a PDU session to support HR-SBO on a VPLMN is described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

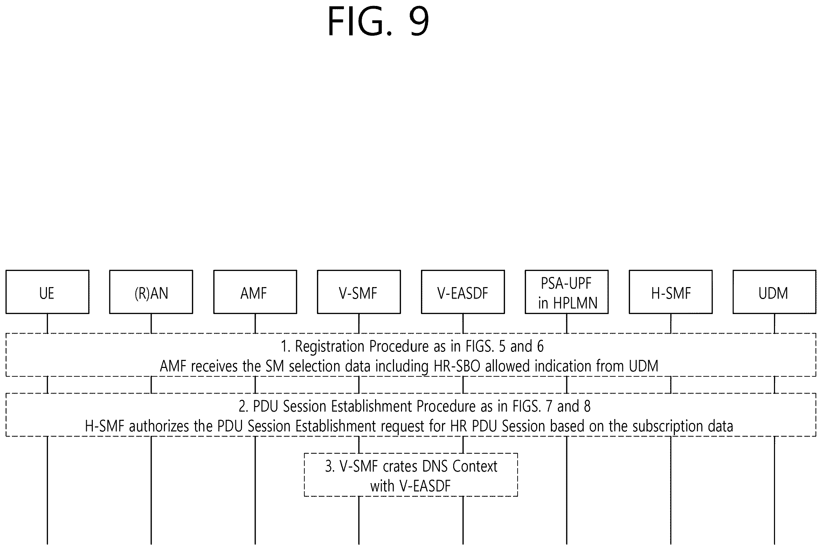

**FIG. 9** **illustrates an example of a procedure associated with a PDU session supporting HR-SBO of a VPLMN.**

In the example of FIG. 9, UE, (R)AN, AMF, V-SMF, V-Edge Application Server Discovery Function (EASDF), Packet Data Unit Session Anchor (PSA)-UPF in HPLMN, H-SMF, UDM are illustrated.

During the registration procedure, in step 14b of the procedure in section 4.2.2.2.2.2 of TS 23.502 V17.7.0, the AMF may receive from the UDM the HR-SBO allowed indication per DNN/S-NSNAI.

2. the PDU session establishment procedure for home routed roaming according to clause 4.3.2.2.2 of TS 23.502 V17.7.0 may be performed. If the AMF has received an HR-SBO allowed indication per DNN/S-NSNAI from the UDM, during the PDU session establishment procedure, the AMF may select a V-SMF that supports HR-SBO.

The AMF may also transmit an indication to the V-SMF that the requested session is allowed for HR-SBO PDU sessions. In this case, the V-SMF may determine, based on this indication, whether to request an HR-SBO PDU session from the H-SMF.

The point at which the V-SMF selects V-EASDF is not fixed. For example, the V-SMF may choose V-EASDF 1) before transmitting an Nsmf_PDUSession_Create request for an HR-SBO PDU session to the H-SMF or 2) after receiving an Nsmf_PDUSession_Create response from the H-SMF.

The V-SMF may transmit a request to establish a PDU session supporting HR-SBO in the VPLMN and may transmit a V-EASDF address to the H-SMF. The H-SMF may authorize the request based on SM subscription data. The H-SMF can provide the V-SMF with an optional VPLMN-specific offloading policy (if available in the HPLMN according to the SLA between the HPLMN and the VPLMN) and the DNS server address of the HPLMN.

SM subscription data may or may not include 1) HR-SBO authorization indication or 2) HR-SBO authorization information, including VPLMN-specific offloading policies. If only the HR-SBO authorization indication is added, the H-SMF may retrieve the VPLMN-specific offloading policy from the H-PCF if it is available in the H-PCF according to the SLA between the HPLMN and the VPLMN.

VPLMN-specific offloading policies can be preconfigured in HPLMN based on the service level agreement between VPLMN and HPLMN.

The H-SMF can also configure a PCO with the DNS server address field set to a V-EASDF address and send the PCO to the V-SMF.

Based on the DNS handling rules, the V-SMF may configure a V-EASDF. For example, if the V-SMF receives the optional VPLMN-specific offloading policy and the DNS server address of the HPLMN in step 2, the V-SMF can configure a V-EASDF based on the DNS handling rules, using the optional VPLMN-specific offloading policy and the DNS server address of the HPLMN.

For the Roaming scenario, the AMF receives the DNN/S-NSSAI specific HR-SBO allowed indication from the UDM during the user registration procedure. Based on the corresponding information (e.g., the HR-SBO allowed indication by DNN/S-NSSAI), the AMF may determine the HR-SBO PDU Session. For example, when the AMF receives a PDU Session establishment request message from the UE, the AMF may determine an HR-SBO PDU Session. In the HR-SBO PDU Session establishment procedure, the V-SMF may select a V-EASDF to operate in the serving network. The V-SMF may make a request to the H-SMF to establish an HR-SBO PDU Session. For example, the V-SMF may use the Nsmf_PDUSession_Create request service operation, including the IP address information of its V-EASDF instance. Based on the Nsmf_PDUSession_Create request service operation, the V-SMF may send an HR-SBO PDU Session establishment request to the H-SMF.

The H-SMF may receive the subscription information of the UE from the UDM. Based on the UE authorization for EAS discovery via EASDF information in the Session Management Subscription data among the UE's subscriber information, the H-SMF may perform an authentication procedure for EASDF usage. If the authentication is successful, the H-SMF sets the V-EASDF IP address information received from the V-SMF to the DNS server address field in the PCO, and the H-SMF may reply an Nsmf_PDUSession_Create response including the V-EASDF IP address information set in the DNS server address field in the PCO.

The V-SMF can then configure DNS handling rules based on the selected V-EASDF.

To support the above service procedures, extensions or improvements to the EASDF service operations defined in the prior art are required. The procedure to obtain the IP address information of the EASDF through the prior art service operations may be performed based on the Neasdf_DNSContext_Create service operation. The IP address information of the UE is defined as a mandatory input parameter for performing the corresponding service operation. However, at the time the V-SMF performs the Neasdf_DNSContext_Create service operation, the V-SMF does not know the UE IP address information. In other words, the V-SMF needs to perform the Neasdf_DNSContext _Create service operation, but it cannot do so because the V-SMF does not know the UE IP address information.

As a result of this service operation, the EASDF creates a DNS Context. It shall not be used in an incomplete state until the UE IP address information is obtained and updated, and shall be deleted if the authentication result of the H-SMF fails. For example, a DNS Context may be configured in the EASDF. In the DNS Context, the IP address information of the terminal may be entered as a mandatory field. Depending on the allocation mechanism in the 5GS, there may be different times when the IP address information of the device is obtained as a valid IP address. Accordingly, there may be a point in time when there is no valid IP address information. When there is no valid IP address information, the IP address information of the device in the DNS Context may be invalid. The state in which invalid device IP address information exists may be incomplete.

Furthermore, according to the prior art, there is no way for the V-SMF to update the UE IP address information in the previously created DNS Context after the V-SMF obtains the UE IP address information and the authorization of the user's V-EASDF usage from the H-SMF.

To summarize, support for providing Edge Computing services to terminals in a home-routed roaming scenario is being discussed. To support selective local routing of Edge Computing traffic in the Home-routed Roaming scenario, the process of establishing and supporting HR-SBO (Home-routed Session Breakout) PDU session is being discussed. In this process, the existing EASDF can be utilized. In the serving network of roaming scenario, EAS discovery procedure from the terminal via V-EASDF may be supported. In the EAS discovery procedure via conventional EASDF, the V-SMF provides the IP address information of the terminal to the EASDF instance selected in the EASDF selection process. This allows the V-SMF and the EASDF to create a DNS context and obtain the IP address information of the EASDF. The V-SMF can then provide the IP address information of the EASDF to the terminal. The EASDF acts as an EAS server/resolver and processes DNS queries from the terminal. For these features to be supported in a Home-routed Roaming scenario, a V-SMF located in the VPLMN (i.e., Roaming network) must select a V-EASDF instance. The V-SMF shall then forward the address information of the corresponding V-EASDF to the terminal via the H-SMF. In a conventional home-routed PDU session establishment procedure, the time when the V-SMF selects the V-EASDF and the time when the V-SMF forwards the address information to the H-SMF may be before the V-SMF obtains the IP address information of the terminal. However, in the prior art, there is no way for the V-SMF to obtain the EASDF address information without the address information of the terminal.

Therefore, to solve this problem, it is necessary to have a method that can perform the following operations even before the V-SMF obains the address information of the terminal. For example, the following methods are needed, herein the methods are related to that the V-SMF obtains the IP address information of the V-EASDF and delivers it to the H-SMF, i) before the address information of the terminal is obtained, and ii) after the V-SMF selects a V-EASDF instance and creates a DNS context.

To solve these problems, the present disclosure proposes various examples. An example of method for obtaining V-EASDF IP address information to support the use of V-EASDF during the HR-SBO PDU Session establishment process is decribed. An example of method for updating the UE IP address information in the DNS Context is described. An example of method for supporting HR-SBO before the H-SMF obtains the correct UE IP address information is described.

In accordance with disclosed examples of the present disclosure, a method of supporting HR-SBO PDU Session for Edge Computing in a Home-routed Roaming scenario may comprise a combination of one or more of the following behaviors/configurations/steps
In accordance with the examples described above, in the present disclosure, the operations of the HR-SBO PDU Session Establishment Process for Edge Computing may be performed. For example, the selection of the V-EASDF in the serving PLMN and the provision of IP address information may be performed. For example, the SMF in the home PLMN may perform the authentication procedure for EASDF usage via "UE authorization for EAS discovery via EASDF information" in the Session Management Subscription data among the subscriber information of the UE.

The methods for supporting the HR-SBO scenario described in the various examples of the present disclosure may include various examples of the following. For example, a method may be proposed, herein the method includes operations in which the V-SMF obtains the V-EASDF IP address information to be provided to the H-SMF after the V-SMF has performed a discovery and selection process for the V-EASDF instance. Further, a method for updating the UE IP address information in the DNS Context in which the V-SMF is created is described. For example, the V-SMF may obtain the address information of the V-EASDF. And the V-SMF may forward the address information of the V-EASDF to the H-SMF. The V-SMF may also update the V-EASDF settings. Method of the H-SMF for supporting HR-SBO technology before the H-SMF obtains the correct UE IP address information is described.

The procedures and/or messages in the various examples described below may be procedures and/or messages that utilize existing procedures/messages. Alternatively, the procedures and/or messages in the various examples described below may be extensions of existing procedures/messages, or new procedures/messages may be defined and used.

In the disclosure of this specification, the terms User Equipment (UE) and terminal may be used interchangeably.

In the following, we focus on the examples suggested by the present disclosure. Where the prior art is identical, the description may be omitted. For example, TS 23.548 V18.0.0 may be referenced for the previously described PDU Session for supporting HR-SBO in VPLMN related behavior and procedures.

Examples 1 through 4 of the present disclosure described below may be applied in combination.

### 1. The first example of the present disclosure

In the following, we describe how the service operation extension supports the obtaining of V-EASDF IP address information.

An example of extending a conventional EASDF service operation is described. For example, based on the extended EASDF service operation, the V-SMF may obtain the IP address information of the selected V-EASDF and update the information in the DNS Context.

Referring again to FIG. 9, an example of the present disclosure is described. In the following, the present disclosure will be described in terms of differences from the PDU Session for supporting HR-SBO in VPLMN procedure of TS 23.548 V18.0.0. FIG. 9 illustrates an example procedure associated with a PDU Session for supporting HR-SBO in VPLMN, according to the disclosure of the present specification.
1. A registration procedure may be performed. During the registration process, in step 14b of the procedure in section 4.2.2.2.2.2 of TS 23.502 V17.7.0, the AMF may receive from the UDM the HR-SBO allowed indication per DNN/S-NSNAI.
2. The PDU session establishment procedure for home routed roaming according to clause 4.3.2.2.2 of TS 23.502 V17.7.0 may be performed. If the AMF has received an HR-SBO allowed indication per DNN/S-NSNAI from the UDM, during the PDU session establishment procedure, the AMF may select a V-SMF that supports HR-SBO.

The AMF may also transmit an indication(e.g., HR-SBO allowed indication) to the V-SMF that the requested session is allowed for HR-SBO PDU sessions. In this case, the V-SMF may decide, based on this indication, whether to request an HR-SBO PDU session from the H-SMF.

The V-SMF may transmit the V-EASDF address and transmit a request to establish a PDU session supporting HR-SBO in the VPLMN to the H-SMF. The V-SMF may use the Neasdf_DNSContext_Create service operation. For example, when the V-SMF invokes the Neasdf_DNSContext_Create service operation to obtain the V-EASDF address, the V-SMF may set the UE IP address to the unspecified address as specified in TS 23.548 clause 7.1.2.2. The V-SMF may include a placeholder UE IP indication. The V-SMF may include the placeholder UE IP indication in messages(e.g., Neasdf_DNSContext_Creqte request message, Neasdf_DNSContext_Update request message) related to the DNS context.

Based on the SM subscription data, which may optionally include an indication of UE authorization for EAS discovery via EASDF, the H-SMF may authorize the request. The H-SMF may configure a PCO with the DNS server address field set to the V-EASDF address and transmit the PCO to the V-SMF. In addition, the H-SMF optionally provides the VPLMN specific offloading policy (if available in the HPLMN according to the SLA between the HPLMN and the VPLMN) and the DNS server address of the HPLMN to the V-SMF. If the HR-SBO request is not authorized, the V-SMF deletes the DNS context from the selected V-EASDF, and the subsequent steps in this procedure involving the EASDF can be skipped.

The H-SMF may perform the following operations in response to an HR-SBO PDU session establishment request including V-EASDF IP address information. For example, the H-SMF may perform authorization to use V-EASDF based on the UE authorization for EAS discovery via EASDF information in the Session Management Subscription data of the UE's subscriber information. Then, the H-SMF may respond by setting the V-EASDF IP address information in the DNS server address area in the PCO to be delivered to the terminal. At this time, the H-SMF may also inform the V-SMF of the IP address (i.e., UE IP address) assigned to the PDU Session.

If the request to the HR-SBO is not authorized, the procedure related to EASDF is not performed. In addition, the V-SMF uses the Neasdf_DNSContext_Delete service operation to cause V-EASDF to delete incomplete DNS contexts created during the process of obtaining V-EASDF IP address information.

SM subscription data may or may not include 1) HR-SBO authorization indication or 2) HR-SBO authorization information, including VPLMN-specific offloading policies. If only the HR-SBO authorization indication is added, the H-SMF may retrieve the VPLMN-specific offloading policy from the H-PCF if it is available in the H-PCF according to the SLA between the HPLMN and the VPLMN.

VPLMN-specific offloading policies can be preconfigured in HPLMN based on the service level agreement between VPLMN and HPLMN.

3. To complete the context setup of the V-EASDF, the V-SMF may provide the UE IP address to the V-EASDF. Based on the DNS handling rules, the V-SMF may configue the V-EASDF. For example, if the V-SMF receives the optional VPLMN specific offloading policy and the DNS server address of the HPLMN in step 2, the V-SMF may set up the V-EASDF based on the DNS handling rules, using the optional VPLMN specific offloading policy and the DNS server address of the HPLMN.

The EAS (re)discovery procedure for HR-SBO roaming scenarios can be performed.

During this procedure, V-SMF can update the IP address information of the terminal based on Neasdf_DNS_Context_Update.

In the following, an example of the Neasdf_DNSContext_Create Service Operation (or service operation) is described in detail. Neasdf_DNSContext _Create can be described as the following example.
Service operation name: Neasdf_DNSContext_Create
Description: Creates a DNS context from EASDF.
Required inputs (e.g., Input, Required): UE IP address, DNN, S-NSSAI, Notification Endpoint.
Optional input (e.g., Input, Optional): DNS message handling rule, Placeholder UE IP indication.

NOTE: In HR-SBO scenarios, the V-SMF may invoke the Neasdf_DNSContext_Create service operation with a placeholder UE IP indication. A placeholder can mean, for example, a placeholder. The placeholder UE IP indication can represent a variable temporary information. For example, a UE IP address provided as a placeholder address that has not yet been assigned (or an unspecified address, e.g., 0.0.0.0) may be assigned to obtain the IP address of the V-EASDF provided to the H-SMF. For example, the V-SMF may assign the UE IP address as an unspecified address (e.g., 0.0.0.0) in order to obtain the IP address of the V-EASDF provided to the H-SMF.

DNS message detection and related behavior can be found in the existing TS 23.548, section 6.2.3.2.2.2.

Required output (e.g. Output, Required): If succeeds, the IP address of the EASDF, the EASDF context ID, and the result indication are output.

Optional output (e.g. Output, Optional): None.

The V-SMF may transmit a placeholder UE IP indication as an input parameter. The V-SMF may set the required input parameter UE IP address value to a temporary placeholder address information (or an unspecified arbitrary value, e.g., 0.0.0.0). For example, based on the UE IP address value set in this manner, the V-SMF may perform the above Neasdf_DNSContext_Create service operation. Accordingly, the V-SMF may obtain the IP address information of the EASDF instance and create a DNS Context. For example, the V-SMF may perform the Neasdf_DNSContext_Create service operation based on the UE IP address value set to the temporary placeholder address information (or any unspecified value, e.g., 0.0.0.0). For example, the V-SMF may send a Neasdf_DNSContext _Create request message to the V-EASDF that includes the UE IP address value set to the temporary placeholder address information (or any unspecified value, e.g., 0.0.0.0).

According to one embodiment of the disclosure, in a home-routed roaming scenario, the IP address information of the EASDF may be obtained based on the above service operation by explicitly entering a separate indication at any point in the process where the H-SMF does not know the UE IP address information of the user, or by using arbitrary UE IP address information.

Specifically, according to the prior art, the terminal IP address is a required input parameter when calling the Neasdf_DNSContext _Create service operation. As a result, the H-SMF cannot perform DNS Context creation(or generation) and EASDF address acquisition without knowing the IP address information of the terminal. In addition, in the home-routed scenario, after the V-SMF obtains the V-EASDF address through the above service operation, the V-SMF must provide the V-EASDF address to the terminal through the H-SMF. During the HR-SBO PDU session establishment procedure, there is a problem that the V-SMF does not know the address information of the terminal at the time when the V-SMF needs to obtain the V-EASDF address and deliver it to the H-SMF.

Accordingly, the disclosed embodiments of the present disclosure may extend or modify a conventional service to obtain a V-EASDF address in advance by sending a message containing temporary IP address information and/or indication of the terminal.

The Placeholder UE IP indication described above may be defined by other names. For example, a placeholder UE IP indication may be defined as a temporary UE IP indication. In various examples of the present disclosure, a Placeholder UE IP indication may be used, for example, by a V-SMF to inform the EASDF that the V-SMF will provide and/or update UE IP address information at a later time. Accordingly, upon receiving the Placeholder UE IP indication, the EASDF may recognize that the UE IP address information is not the actual UE IP address. Alternatively, the EASDF may recognize that the UE IP address information is a temporarily provided UE IP address. When the Placeholder UE IP indication is provided, the UE IP address information may be set to a value such as a null/unspecified address, or a null/unspecified prefix. In other words, the V-SMF may transmit, to the V-EASDF, a UE IP address set to a value such as null/unspecified address or null/unspecified prefix. For example, for an IPv4 address, the Placeholder UE IP indication may be 0.0.0.0. For example, for an IPv6 address, the Placeholder UE IP indication could be a value such as ::.

Even if the V-SMF does not provide a placeholder UE IP indication, the V-SMF may still inform the EASDF that the V-SMF will provide/update the UE IP address information in the future based on the UE IP address information provided by the V-SMF. Even if no placeholder indication is provided, a specific temporary IP address specified by the operator may be used. In this case, a SMF and an EASDF may recognize the temporary IP address. For example, if a specific UE IP is included in a service operation, the SMF and the EASDF may recognize that the temporary terminal address information in the corresponding DNS context has been set. In this case, the UE IP address information may be set to values such as null/unspecified address, null/unspecified prefix, etc. Alternatively, it may be set to a specific IP address value defined for this purpose. The operator may define the above specific values, and these specific values may be set in the SMF and EASDF.

In the following, an example of the Neasdf_DNSContext_Update Service Operation (service behavior or service operation) is described in detail. Neasdf_DNSContext_Update can be described as the following example.
Service operation name: Neasdf_DNSContext_Update
Description: It may indicate the EASDF to update the DNS context or to forward DNS response to the UE.
Required input (e.g., Input, Required): EASDF context ID, updated DNS message handling rules.
Optional input (e.g., Input, Optional): UE IP address

NOTE: To update the DNS context of the V-EASDF, in HR-SBO scenario, the V-SMF may invoke Neasdf_DNSContext_Update based on the UE IP address received from the H-SMF.

Required output (e.g., Output, Required): result indication.

Optional output (e.g., Output, Optional): None.

After the operation of creating the DNS context and obtaining the IP address information of the EASDF instance are performed, the V-SMF may update the valid IP address information of the user terminal. For example, the V-SMF may obtain the valid terminal IP address information from the H-SMF. In the HR-SBO scenario, after the V-SMF obtains the valid IP address information of the user terminal, the V-SMF may update the DNS context in the V-EASDF that was previously temporarily established.

In the home-routed roaming scenario described earlier based on various examples, the V-SMF may obtain the IP address information of the selected V-EASDF instance. The V-SMF may include the IP address information of the V-EASDF instance in the HR-SBO PDU Session establishment request. The V-SMF may forward the above HR-SBO PDU Session Establishment Request message to the H-SMF. Also, the operation of setting the V-EASDF IP address information in the PCO of the H-SMF according to the result of the authorization of V-EASDF usage in the H-SMF is described. Also, an example of the behavior of deleting DNS Context was described. Accordingly, the existing service operations for obtaining EASDF IP address information (e.g., Neasdf_DNSContext _Create Service Operation) and service operations for updating DNS Context (e.g., Neasdf_DNSContext_Update Service Operation) have been extended (or changed).

By extending (or changing) the service operations as in the above example, the following behavior may be supported in roaming scenarios where the serving NF (e.g., V-SMF) does not know the IP address information of the user UE provided by the HPLMN. For example, even at this point, the serving NF may obtain the IP address information from the EASDF and forward it to the HPLMN. By forwarding the IP address information of the EASDF to the HPLMN, the behavior of including the IP address information of the EASDF in the container to be delivered to the UE may be supported.

Based on this behavior, signaling transactions between the serving network (in particular, the serving SMF) and the home network (in particular, the home SMF) may be reduced. Further, NAS procedures between the terminal and the network may also be reduced. Further, based on the method for assigning the IP address information of the UE, the V-SMF may obtain the V-EASDF address information and update the information included in the DNS context even in environments/time points where the address information is obtained at different times.

For example, in a home-routed roaming scenario according to the prior art, the V-EASDF address information is delivered from the V-SMF to the terminal via H-SMF. The IP address information of the terminal required to obtain the corresponding V-EASDF address is assigned via DHCP or from the HPLMN 5GC. The time at which the IP address information of the terminal is assigned may be different, and this information is provided in the VPLMN (V-SMF). As a result, at the time when the V-EASDF address is required in the HR-SBO PDU session establishment procedure according to the prior art, the address information of the terminal may not exist. According to the prior art, the V-EASDF address cannot be provided to the terminal before the IP address information of the terminal is obtained. Therefore, if the address information of the terminal is acquired at a time after the NAS message for establishing the PDU session is sent to the terminal, a separate signaling is required to provide the V-EASDF address to the terminal.

Thus, in accordance with various embodiments of the present disclosure, signaling between V-SMFs and H-SMFs and NAS signaling to terminals can be reduced.

### 2. The second example of the present disclosure

In the following, we describe an example of how to obtain EASDF IP address information via NRF.

A second example of the present disclosure is described to accomplish a similar purpose to the process described in the first example of the present disclosure. In the following, an example of a process for obtaining IP address information of an EASDF instance by extending NRF functionality is described. In the following, the second example of the disclosure is described with emphasis on differences from the prior art, and with reference to the description in clause 6.3.23 of TS 23.501 V17.5.0, the following may be suggested
An example of EASDF discovery and selection is described.

Multiple EASDF instances can be deployed on a network. Note that the NF consumer referred to here is SMF.

NF Consumers must utilize the NRF to discovery EASDF instances when EASDF information is not available by other means (e.g., if locally configured to the NF Consumer). The NF Repository Function (NRF) provides the IP address of the EASDF instance to the NF Consumer. The EASDF selection function of the NF Consumer or SCP selects an EASDF instance based on the available EASDF instances.

When an NF consumer or SCP chooses EASDF, they may consider the following factors:
- S-NSSAI.
- DNN.
- The N6 IP address of the EASDF.

NOTE: The IP address of the EASDF is not used for EASDF discovery. This address can be used to select an EASDF that is "IP near" to the PSA in the PDU session.
- N6 IP address of the PSA UPF.
- Location according to the NF profile.
- DNAI (if present).

The V-SMF may perform the EASDF discovery and selection process. Based on these behaviors, the V-SMF enables the NF consumer to obtain the IP address information of the selected EASDF instance through the NRF.

In an HR-SBO scenario, the V-SMF may receive V-EASDF IP address information from the NRF. The V-SMF may transmit an HR-SBO PDU Session Establishment Request message including the provided V-EASDF IP address information to the H-SMF.

To obtain the N6 IP address of the EASDF, the SMF may perform an EASDF discovery and selection process through the NRF. The SMF may include information requesting the N6 IP address of the EASDF in the EASDF discovery and selection process.

As shown in the example above, the NRF functionality may be extended. Based on the extended NRF functionality, the NF consumer may perform EASDF selection and discovery procedures. Accordingly, the NF consumer can obtain the IP address information of the selected EASDF instance. Unlike the prior art for the IP address information acquisition procedure based on the Neasdf_DNSContext _Create service operation to the selected EASDF, the IP address information can be acquired without incomplete DNS context creation. That is, the V-SMF can acquire IP address information for the EASDF instance that has performed the registration procedure as an NRF.

### 3. A third example of the present disclosure

The new indication in the SM NAS message transmitted to the UE may be used. Based on the new indication, the DNS query of the terminal can be delayed until the V-EASDF IP address information is obtained.

When the terminal receives a PDU Session Establishment Accept message including the DNS server address, the terminal can perform a DNS query. However, the VPLMN may not yet have completed the DNS context establishment with the V-EASDF. For example, the V-SMF may still be in the process of establishing the DNS context by providing the UE IP address to the V-EASDF. In this case, it is needed to prevent the terminal from making DNS queries before the DNS context is established. A new indication can be defined to tell the terminal not to send a DNS query. The V-SMF or H-SMF may transmit the new indication to the terminal with the PDU Session Establishment Accept message. Upon receipt of the indication, the UE may not transmit a DNS query until it receives an indication that it is allowed to perform a DNS query. The V-SMF or H-SMF may delay the DNS query by transmitting a new indication to the UE.

Among the conventional methods of obtaining a user terminal IP address, the terminal may request an IPv4 address assignment using DHCPv4 in a PDU Session Establishment Request message. This may lead to an assignment process via its own DHCPv4 using the terminal's connection to the 5GC after the PDU Session establishment procedure. In this scenario, after the terminal establishes the HR-SBO PDU Session, it can be prevented from performing DNS queries for Edge computing services until the correct DNS server/resolver address is established from the 5GC.

### 4. A fourth example of the present disclosure

Until V-EASDF IP address information is obtained, the 5GC may delay processing DNS queries.

For purposes similar to the process described in the third example of the present disclosure, the following operations may be performed. For example, the HR-SBO PDU session establishment process may be completed at a time before the IP address information of the EASDF is assigned, or before the IP address information of the user terminal is assigned. In this case, the 5GC that receives the DNS query from the terminal may delay processing the DNS query for the Edge computing service until the correct DNS server/resolver or V-EASDF address is established. Until the V-EASDF IP address is obtained and the DNS context is created, the delayed DNS query can be buffered, or the service can be provided with a new DNS query after the address information is sent to the terminal. The proposed method can be operated/applied by V-SMF and V-UPF in roaming scenarios.

According to any of the first through fourth examples of the disclosure above, the correct V-EASDF IP address information may be obtained during the HR-SBO PDU session establishment procedure, and the V-EASDF IP address may be set to the terminal. The operation to perform these operations may be performed by extending an existing service operation or by creating a new service operation.

In the methods proposed in the third example and the fourth example of the present disclosure, the terminal or 5GC may delay DNS queries from the terminal until the correct V-EASDF IP address information is established. The delay by the terminal or 5GC may be accomplished by generating a new service operation or indication.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

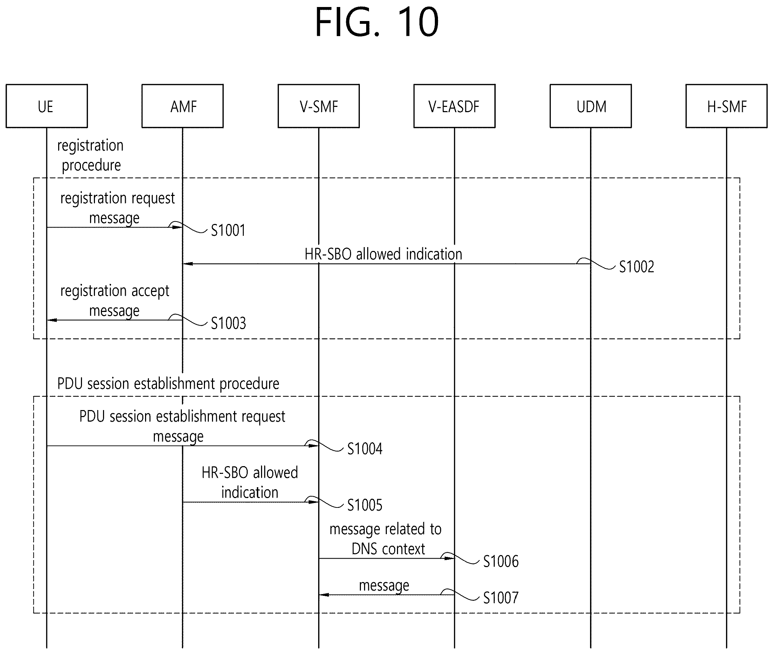

**FIG. 10** **illustrates an example of a procedure in accordance with one embodiment of the disclosure.**

Note that the procedure illustrated in FIG. 10 is illustrative only, and the scope of the present disclosure is not limited by the example of FIG. 10. For example, UE, AMF, V-SMF, V-EASDF, UDM, and H-SMF illustrated in FIG. 10 may perform the operations described in any of the examples of FIG. 1 through FIG. 9.

For example, for the example of FIG. 10, the behavior described in the examples of FIGS. 1 through 9 may also be applied. For example, any behavior, content, etc. described in the various examples of the disclosure may be applied, even if the behavior, content, etc. is not directly described in the example of FIG. 10.

In the example of FIG. 10, after the registration procedure is performed, a PDU session establishment procedure may be performed, as in various examples of the present disclosure described with reference to FIG. 9. Then, the V-SMF and V-EASDF may generate a DNS context.

Note that in the example of FIG. 10, the UE may be in the state of attempting Home Routed Session Breakout (HR-SBO) roaming.

At step S1001, the UE may send a registration request message to the AMF. For example, the registration request message sent by the UE may enable or trigger the AMF to perform the following actions. For example, the registration request message may be used to enable the AMF to receive an HR-SBO allowed indication from the UDM.

At step S1002, the AMF may receive SMF selection subscription data from the UDM. The SMF selection subscription data may include an HR-SBO allowed indication. The HR-SBO allowed indication may mean that HR-SBO is allowed.

In step S1003, the AMF may send a registration acceptance message to the UE.

Note that step S1001 to step S1003 may be part of an registration procedure. Of note, the registration procedure may be performed with reference to the enrollment process of FIGS. 5 and 6.

In step S1004, the UE may send a PDU session establishment request message to the AMF. Then, based on the PDU session establishment request message from the UE, the AMF may select the V-SMF and transmit a request for creating a session management (SM) context to the V-SMF. For example, the PDU session establishment request message may enable or trigger the V-SMF to perform an operation. For example, if the V-SMF does not know the IP address of the UE, the PDU Session Establishment Request message may be used to send a request message to the EASDF for the creation of a DNS Context containing a UE IP address that is set to an unspecified address by the V-SMF.

In step S1005, the AMF may determine the HR-SBO allowed indication by DNN/S-NSSAI based on the subscriber information. Accordingly, the AMF may select a V-SMF that supports HR-SBO and transmit the HR-SBO allowed indication to the V-SMF. Based on receiving the HR-SBO allowed indication, the V-SMF may select the EASDF.

In step S1006, the V-SMF may transmit a DNS context related message to the V-EASDF. The DNS context related message may include UE IP address information. The DNS context related message may be based on a service operation related to the creation of a DNS context (e.g., Neasdf_DNSContext_Create service operation). The DNS context related message may be, for example, a request message related to the creation of a DNS context. If the V-SMF does not know the IP address of the UE, the V-SMF may set the UE IP address to an unspecified address. For example, a DNS context related message sent by the V-SMF may include the UE IP address set to an unspecified address. The DNS context related message may contain the UE IP address, DNN, S-NSSAI, and Notification Endpoint.

At step S1007, the V-EASDF may transmit a message to the V-SMF. The message may include the IP address of the EASDF. The message may include the IP address of the EASDF, the EASDF context ID, and a result indication.

The V-SMF may transmit the IP address of the EASDF to the H-SMF. The V-SMF may send a PDU session creation request message to the H-SMF. For example, the V-SMF may send a message to the H-SMF requesting the establishment of a PDU session supporting HR-SBO within the VPLMN. This request message may include the IP address of the EASDF. For example, the PDU session creation request message may be Nsmf_PDUSession_Create Request message.

The H-SMF may transmit a response message to the V-SMF regarding the PDU session creation. The V-SMF may then transmit a PDU session establishment acceptance message to the UE. The DNS server address field in this PDU session establishment acceptance message may include the IP address of the EASDF received from the V-SMF.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

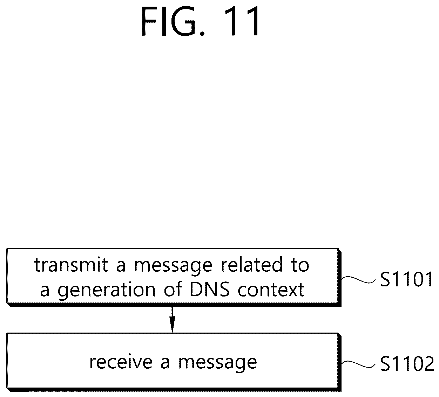

**FIG. 11** **illustrates an example of operation of a V-SMF in accordance with one embodiment of the disclosure.**

It should be noted that the procedure shown in FIG. 11 is illustrative only, and the scope of the disclosure is not limited by the example in FIG. 11.

For example, for the example of FIG. 11, the behavior described in the examples of FIGS. 1 through 10 may also be applied. For example, any behavior, content, etc. described in the various examples of the disclosure may be applied, even if the behavior, content, etc. is not directly described in the example of FIG. 11.

The V-SMF may receive the HR-SBO allowed indication from the AMF.

In step S1101, the V-SMF may transmit a message related to the creation of the DNS context to the EASDF. The DNS context related message may be based on a service operation related to the creation of the DNS context, such as the Neasdf_DNSContext_Create service operation. The DNS context related message may be, for example, a request message related to the creation of the DNS context. Based on the V-SMF not knowing the IP address of the User Equipment (UE), the message may include a UE IP address set to an unspecified address. The DNS context related message may include the UE IP address, DNN, S-NSSAI, and Notification Endpoint.

At step S1201, the V-SMF may receive a message from the EASDF. The message may include an IP address of the EASDF. The message may include the IP address of the EASDF, the EASDF context ID, and a result indication.

The V-SMF may transmit the IP address of the EASDF to the H-SMF. The V-SMF may send a PDU session creation request message to the H-SMF. This request message may include the IP address of the EASDF. For example, the PDU session creation request message may be an Nsmf_PDUSession_Create Request message. For example, the V-SMF may send a message to the H-SMF requesting the establishment of a PDU session supporting HR-SBO within the VPLMN.

The H-SMF may transmit a response message to the V-SMF regarding the PDU session creation. The V-SMF may then transmit a PDU session establishment acceptance message to the UE. The PDU session establishment acceptance message includes DNS server address information. The DNS server address information includes the address information of the EASDF.

In prior art home-routed roaming scenarios, the UE may need to receive additional NAS messages in order to receive the DNS server address (e.g., the address of the EASDF). For example, in the HR-SBO PDU session establishment procedure, depending on when the UE acquires a valid IP address, the UE may need to receive a separate NAS message from the 5GC containing the EASDF IP address. However, in various embodiments of the present disclosure, the UE may receive the EASDF IP address without having to receive the additional NAS message of the conventional procedure.

In accordance with various examples of the present disclosure, the behavior described in the present disclosure may be applied by a 5GC or UE within a PLMN serving in a roaming scenario.

For example, in a home-routed roaming scenario, a UE may establish a connection with a 5G network via a HR-SBO PDU session establishment request. During the registration procedure of the UE, the serving AMF may receive a DNN/S-NSSAI specific HR-SBO allowed indication from the UDM/UDR. Based on this information, a PDU session based on Home-routed Session Breakout (HR-SBO) may be allocated/assigned/determined for the PDU session establishment request of the UE. For the PDU Session request of the UE, the establishment of an HR-SBO PDU Session may be determined. In this case, the V-SMF in the serving PLMN may send a PDU Session establishment request message containing the selected V-EASDF IP address information to the H-SMF.

For example, to obtain V-EASDF IP address information, V-SMF can perform one of the procedures in the examples below:
- The V-SMF may perform a service operation that is an extension of the existing Neasdf_DNSContext_Create service operation. Based on this, the V-SMF may create the DNS Context of the selected V-EASDF instance and obtain the IP address information of the V-EASDF.
- Based on the extension of the existing NRF function, V-SMF can perform EASDF discovery and selection procedures and obtain V-EASDF IP address information.

3) If the DNS Context is created without the IP address information of the user terminal using the method proposed above, the existing Neasdf_DNSContext_Update service operation can be extended to update the UE IP address information in the DNS Context.

4) If the HR-SBO PDU session establishment procedure is completed before the IP address information of EASDF is assigned or before the IP address information of the user's terminal is assigned, the following procedure can be performed as a way to delay the processing of DNS queries from the terminal:
- In the HR-SBO PDU Session establishment procedure, a new indication may be added in the NAS SM message sent to the UE. As a result, DNS queries may be delayed until the creation and configuration of the DNS context is completed and the V-EASDF address information is established in the terminal;
- After the HR-SBO PDU Session is established, the 5GC may delay the processing of DNS queries from the terminal. DNS query can be resumed after the creation and configuration of DNS Context is completed and V-EASDF address information is set on the device.

The present disclosure may have various effects.

For example, within the service procedure for HR-SBO support, the V-SMF may provide the V-EASDF IP address information from the serving PLMN to the home PLMN. After performing the HR-SBO PDU Session establishment procedure, DNS queries can be delayed/processed regardless of whether the user terminal's IP address information and V-EASDF IP address information are obtained. In order for V-SMF to perform the operation of creating a DNS Context in EASDF and the operation of obtaining IP address information, it needs the IP address information of the device. The V-SMF may provide unspecified address information to the V-EASDF even when the V-SMF does not know the IP address information of the terminal. Accordingly, the V-EASDF may create a DNS context, and the V-SMF may obtain the IP address information of the V-EASDF. The V-SMF may provide the IP address information of the V-EASDF to the H-SMF and the terminal. The various examples described in the disclosure of this specification may be applied regardless of the version of the V-EASDF. After obtaining the address information of the terminal, the delivery of the V-EASDF address information can be supported within the conventional home-routed PDU session establishment procedure without unnecessary signaling between the serving network and the home network. For example, V-SMF needs the IP address of the terminal to acquire the V-EASDF address. The IP address of the terminal is provided by the H-SMF in the Nsmf_PDUSession_Create response during the PDU session establishment procedure and passed to the V-SMF, but the signal is received after the V-SMF obtains the V-EASDF address. Therefore, according to the prior art, separate signaling between the V-SMF and the H-SMF in the HR-SBO PDU establishment procedure is unavoidable. Further, according to the prior art, signaling from the V-SMF to the H-SMF and signaling from the H-SMF to the UE is required to construct a separate NAS message containing the V-EASDF address at a time after the HR-SBO PDU establishment procedure, depending on when the valid IP address of the terminal is acquired. In other words, according to various embodiments of the present disclosure, the following prior art signaling may be reduced. In the prior art, the V-SMF needs to perform a separate signaling to the H-SMF to provide the V-EASDF address to the terminal after the HR-SBO PDU session establishment procedure, and the H-SMF needs to perform a separate signaling to the terminal after the NAS message is separately configured and transmitted to the terminal.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, UDM, EASDF, PSA-UPF, UPF, H-SMF, V-SMF, V-EASDF etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a Visited-Session Management Function (V-SMF) and comprising:
receiving a Home Routed Session BreakOut (HR-SBO) allowed indication from an Access and Mobility Management Function (AMF);
transmitting a request message related to the creation of a Domain Name System (DNS) context to an Edge Application Server Discovery Function (EASDF),
wherein the message includes a User Equipment (UE) Internet Protocol (IP) address set to an unspecified address, based on the V-SMF not knowing an IP address of a UE; and
receiving a response message including an IP address of the EASDF from the EASDF.

2. The method of claim 1, further comprising:
transmitting the IP address of the EASDF to the H-SMF.

3. The method of claim 1 or claim 2,
wherein the request message includes the UE IP address, a Data Network Name (DNN), a Single Network Slice Selection Assistance Information (S-NSSAI), and a Notification Endpoint.

4. The method of any one of claims 1 to 3,
wherein the response message includes the IP address of the EASDF, the EASDF context ID, and a result indication.

5. The method of any one of claims 1 to 4, further comprising:
selecting the EASDF based on the HR-SBO allowed indication being received.

6. The method of any one of claims 1 to 5,
wherein the request message is a message based on the Neasdf_DNSContext_Create service operation.

7. The method of any one of claims 1 to 6, further comprising:
receiving a Packet Data Unit (PDU) session establishment request message the UE;
transmitting a request message realted to the generation of the PDU session to the Home-Session Management Function (H-SMF),
wherein the request message related to the generation of the PDU session including the IP address of the EASDF;
receiving a response message related to the generation of the PDU session from the H-SMF,
wherein the response message related to the generation of the PDU session including the IP address of the EASDF to be forwarded to the UE; and
transmitting a PDU session establishment acceptance message to the UE.

8. A Visited-Session Management Function (V-SMF) for performing communications, wherein the V-SMF comprising:
one or more transceivers;
one or more processors; and
one or more memories storing instructions and operably coupled to the one or more processors,
wherein based on the instructions being executed by the one or more processors, the operations being performed include a method according to any one of claims 1 to 8.

9. A method for performing communication, the method performed by a User Equipment (UE) and comprising:
transmitting a registration request message to an Access and Mobility Management Function (AMF),
wherein the registration request message being used by the Access and Mobility Management Function (AMF) to receive an HR-SBO allowed indication from the Unified Data Management (UDM); and
receiving a registration acceptance message from the AMF;
transmitting a Packet Data Unit (PDU) session establishment request message to the AMF,
wherein the PDU session establishment message enables the AMF to select a V-SMF that supports HR-SBO, and
wherein the PDU session establishment request message is used by the V-SMF to transmit a request message related to the creation of a DNS context includes a UE IP address set to an unspecified address, to the Edge Application Server Discovery Function (EASDF), if the V-SMF does not know the IP address of the UE; and
receiving a PDU session establishment acceptance message from the V-SMF,
wherein the PDU session establishment acceptance message includes DNS server address information, the DNS server address information includes address information of the EASDF.

10. A User Equipment (UE) configured to operate in a wireless communication system, wherein the UE comprising:
one or more transceivers;
one or more processors; and
one or more memories storing instructions and operably coupled to the one or more processors,
wherein based on the instructions being executed by the one or more processors, the operations being performed include a method according to claim 9.

11. An apparatus in mobile communication, the apparatus comprising:
at least one processor; and
at least one memory storing instructions and operably coupled to the one or more processors,
wherein based on the instructions being executed by the one or more processors, the operations being performed include:
transmitting a registration request message to an Access and Mobility Management Function (AMF),
wherein the registration request message being used by the Access and Mobility Management Function (AMF) to receive an HR-SBO allowed indication from the Unified Data Management (UDM); and
receiving a registration acceptance message from the AMF;
transmitting a Packet Data Unit (PDU) session establishment request message to the AMF,
wherein the PDU session establishment message enables the AMF to select a V-SMF that supports HR-SBO, and
wherein the PDU session establishment request message is used by the V-SMF to transmit a request message related to the creation of a DNS context includes a UE IP address set to an unspecified address, to the Edge Application Server Discovery Function (EASDF), if the V-SMF does not know the IP address of the UE; and
receiving a PDU session establishment acceptance message from the V-SMF,
wherein the PDU session establishment acceptance message includes DNS server address information, the DNS server address information includes address information of the EASDF.

12. A non-transitory computer readable storage medium recording instructions,
wherein the instructions, when executed by the one or more processors, causing the one or more processors to perform operations include:
transmitting a registration request message to an Access and Mobility Management Function (AMF),
wherein the registration request message being used by the Access and Mobility Management Function (AMF) to receive an HR-SBO allowed indication from the Unified Data Management (UDM); and
receiving a registration acceptance message from the AMF;
transmitting a Packet Data Unit (PDU) session establishment request message to the AMF,
wherein the PDU session establishment message enables the AMF to select a V-SMF that supports HR-SBO, and
wherein the PDU session establishment request message is used by the V-SMF to transmit a request message related to the creation of a DNS context includes a UE IP address set to an unspecified address, to the Edge Application Server Discovery Function (EASDF), if the V-SMF does not know the IP address of the UE; and
receiving a PDU session establishment acceptance message from the V-SMF,
wherein the PDU session establishment acceptance message includes DNS server address information, the DNS server address information includes address information of the EASDF.
